# EUROPÄISCHE PATENTANMELDUNG

(11) **EP 0 555 641 A1**
(43) Veröffentlichungstag der Anmeldung: **18.08.1993**
(21) Anmeldenummer: 93100383.4
(22) Anmeldetag: 13.01.1993
(51) Int. Cl.: A47K 10/48, A47K 1/00, A47K 3/22, A47B 67/02

(54) **Funktionsträger für Sanitärräume**

(30) Priorität: 14.02.1992 DE 4204380
(71) Anmelder: Ucosan B.V., NL-9301 ZR Roden (NL)
(72) Erfinder: Dijkuizen, Okko K., c/o KEIL & SCHAAFHAUSEN, W-6000 Frankfurt am Main 1 (DE)
(74) Vertreter: Keil, Rainer A., Dipl.-Phys. Dr.

(57) **Zusammenfassung**

Die Erfindung betrifft einen Funktionsträger für Sanitärräume, wie Badezimmer, Duschräume oder dgl., welcher als schlanke, vertikale Säule (1) ausgebildet ist, die alleinstehend aufstellbar, zwischen Raumdecke (D) und Raumboden (B) einspannbar oder als Teil einer Sanitäreinrichtung anordenbar ist und an bzw. in der eine oder mehrere Funktionseinheiten für die Beleuchtung, für die Erwärmung und/oder Abkühlung von Luft, für die Befeuchtung und/oder Trocknung von Luft, für die Reinigung von Luft, für die Erwärmung, Abkühlung und/oder Trocknung von Oberflächen und/oder Gegenständen, für die Körper- und/oder Haarpflege, für das Aufhängen und/oder die Ablage von Kleidungsstücken, Sanitärgeräten oder -zubehör, für die Aufnahme und/oder Führung von stromführenden Kabeln, für das Schalten elektrisch betriebener Einrichtungen, für die Aufnahme von Abfall und/oder Wäsche, für die Ton- und/oder Bildübermittlung, für die Anzeige von Informationsdaten und/oder für die Freizeitgestaltung und/oder das Körpertraining vorgesehen sind.

## Beschreibung

Die Erfindung betrifft einen Funktionsträger für Sanitärräume, wie Badezimmer, Duschräume oder dgl.

In Sanitärräumen, bspw. Badezimmern werden eine Vielzahl hygienischer Tätigkeiten, wie Waschen, Abtrocknen, Frisieren etc. durchgeführt, für welche die unterschiedlichsten Gerätschaften und Utensilien, aber auch Ablage- und Aufhängemöglichkeiten erforderlich sind. Gleichzeitig soll im Badezimmer ein angenehmes Klima herrschen und, insbesondere zum Frisieren und Schminken, eine ausreichende und u.U. auch gezielte Beleuchtung vorhanden sein. Auch hierfür sind die verschiedensten Einrichtungen erforderlich, was insbesondere in kleineren Bädern zu Platzproblemen führt. Wegen der in Sanitärräumen herrschenden Feuchtigkeit ist bei Elektrogeräten eine sichere Stromzufuhr erforderlich, so daß die Stromleitungen entsprechend den Bauvorschriften unter Putz verlegt werden sollten. Dies erfordert jedoch z.B. in gekachelten Sanitärräumen einen relativ hohen Aufwand, da die Kacheln beim Abschlagen häufig beschädigt werden und ggf. nicht mehr in identischer Form neu beschafft werden können. Ähnliche Probleme stellen sich in Dusch- oder Waschräumen an Sport- oder Arbeitsstätten, welche auch von mehreren Personen gleichzeitig benutzt werden. Die in der Regel an der Raumwand angebrachten Einrichtungen, wie Haartrockner, Spiegel und dgl., sind dabei jeweils immer nur von einer Person nutzbar, so daß sich Wartezeiten ergeben. Das Hinzufügen weiterer derartiger Einrichtungen ist jedoch aus Platzgründen häufig nicht möglich, wobei die Nachrüstung mit Elektrogeräten, wie oben angeführt, auch wegen der Sicherheitsbestimmungen bei der Stromzuführung sehr aufwendig sein kann.

Aus der DE-OS 28 33 188 ist ein elektrischer Beleuchtungskörper für Wohnräume bekannt, welcher als Lichtleitröhre ausgebildet ist, die mit einem Standfuß auf dem Boden aufsteht und sich mit einem elastischen Pufferelement an der Raumdecke abstützt. Am oberen und unteren Ende der Lichtleitröhre sind Lichtquellen angeordnet, welche Licht im wesentlichen parallel zur Röhrenachse emitieren. In der Lichtleitröhre sind schwenkbare Reflektorspiegel angeordnet, mittels derer Licht aus dem von der Lichtquelle kommenden, parallel zur Röhrenachse verlaufenden Lichtbündel ausgeblendet und in beliebige Richtungen, bspw. auf einen Arbeitsplatz, geleitet werden kann. Im übrigen Bereich der Lichtleitröhre, die aus transparentem Material besteht, wird diffuses Streulicht emitiert. Dieser Beleuchtungskörper stellt eine, nur einem einzigen Zweck dienende Einrichtung dar, welche zusätzlich zu den schon vorhandenen Einrichtungen in dem zu beleuchtenden Raum angeordnet werden muß und dadurch die Platzprobleme eher vergrößert.

Aufgabe der vorliegenden Erfindung ist es daher, einen gattungsgemäßen Funktionsträger derart zu schaffen, daß verschiedene im Sanitärbereich benötigte Funktionseinheiten platzsparend untergebracht und gut zugänglich sind sowie eine einfache Nachrüstung bestehender Sanitärräume möglich ist.

Diese Aufgabe wird mit der Erfindung im wesentlichen dadurch gelöst, daß der Funktionsträger als schlanke, vertikale Säule ausgebildet ist, welche alleinstehend aufstellbar, zwischen Raumdecke und -boden einspannbar oder als Teil einer Sanitäreinrichtung anordenbar ist und an bzw. in welcher eine oder mehrere Funktionseinheiten für die Beleuchtung, für die Erwärmung und/oder Abkühlung von Luft, für die Befeuchtung und/oder Trocknung von Luft, für die Reinigung von Luft, für die Erwärmung, Abkühlung und/oder Trocknung von Oberflächen und/oder Gegenständen, für die Körper- und/oder Haarpflege, für das Aufhängen und/oder die Ablage von Kleidungsstücken, Sanitärgeräten und/oder -zubehör, für die Aufnahme und/oder Führung von stromführenden Kabeln, für das Schalten elektrisch betriebener Einrichtungen, für die Aufnahme von Abfall und/oder Wäsche, für die Ton- und/oder Bildübermittlung für die Anzeige von Informationsdaten und/oder für die Freizeitgestaltung und/oder das Körpertraining vorgesehen sind.

Durch seine schlanke Form beansprucht der Funktionsträger nur geringen Raum und ist somit vielseitig auch in engen Räumen verwendbar. Der Funktionsträger kann dabei freistehend aufgestellt, zwischen Raumdecke und Raumboden eingespannt oder in einer Sanitäreinrichtung, bspw. eine Badewanne oder einer Duschkabine, integriert sein, wodurch zusätzlich Platz eingespart wird. Die Kombination verschiedener Funktionseinheiten an dem Funktionsträger macht deren Benutzung angenehmer und erhöht den Komfort im Bad. So kann bspw. ein Spiegel angeleuchtet, an der Säule aufgehängte Handtücher getrocknet und angewärmt oder der Bereich vor der Säule z.B. mit einem Wärmestrahler geheizt werden. Gleichzeitig können natürlich beliebige andere Funktionseinheiten genutzt werden: Durch die Anordnung von Funktionseinheiten in oder an der Säule können auf geringstmöglichem Raum möglichst viele Funktionen angeboten werden, wobei auch die gleichzeitige Verwendung der einzelnen Funktionseinheiten durch mehrere Personen, bspw. in Dusch- oder Waschräumen ermöglicht wird. An dem Funktionsträger können dabei die verschiedensten Accessoires und/oder Zubehörteile wie Spiegel, Brillenhalter, Becherhalter, Zahnbürstenhalter, Handgriffe, Handtuchstange, -halter, -haken, Handtuchtrockner, Kleiderhaken, -stange, Seifenschale, Seifendispensierer, Papierkorb, Aschenbecher, Tissuekasten, Kamm-, Bürstenhalter, Maniküresethalter, Behälter für Toilettenpapier, Sitz oder Sitzecke, Schublade oder Fach (z.B. für Handtücher, Waschlappen, Seifenpulver, Shampoo etc.), Ablagebrett, Kühlanlagen, Haartrockner, Munddusche, elektrische Zahnbürste, Telefon, Babyphon, Fernseher, Radio, Kopfhörer, Waage, Rasierapparat, Staub-, Feuchtigkeitssauger, Bräunungsgerät, Luftreinigungseinrichtung, Klimatisierungsgerät, Kalender, Uhr, Hygrometer, Barometer, Thermometer, elektronische Spiele, Schach-, Damespiel, Zeichenbrett, Wärmeauslaß oder dgl. angebracht oder anschließbar sein.

Um der Säule eine ausreichende Stabilität zu verleihen, weist diese bei einer bevorzugten Ausgestaltung der Erfindung ein Trägergerüst aus im wesentlichen vertikal angeordneten Längsprofilen auf, welche über Verbindungselemente miteinander verbunden sind.

Erfindungsgemäß sind die Verbindungselemente im wesentlichen horizontal angeordnet und als gerade, abgewinkelte oder gekrümmte Streben, Platten, Scheiben oder dgl. ausgebildet und verbinden die Längsprofile in stern-, dreieck-, kreis- oder teilkreisförmiger Anordnung oder dgl. miteinander.

Bei einer anderen bevorzugten Ausführungsform ist die Säule als selbsttragende Röhre ausgebildet oder weist eine solche auf. Diese Röhre bestimmt im wesentlichen die äußere Gestalt des Funktionsträgers.

Ein sicherer Stand des Funktionsträgers wird erfindungsgemäß dadurch erreicht, daß an dem oberen und/oder dem unteren Ende der Säule jeweils Befestigungseinrichtungen vorgesehen sind. Die Befestigungseinrichtungen sind dabei vorzugsweise als verstellbare Buchse ausgebildet, mittels welcher die Säule zwischen Raumdecke und Raumboden verspannbar ist. Erforderlichenfalls kann die Säule jedoch auch mit Decke und/oder Boden fest verankerbar bspw. verschraubbar sein. Dadurch kann die Säule trotz ihrer schlanken Gestalt nicht umfallen.

In Weiterbildung des Erfindungsgedankens sind an dem Trägergerüst oder der Röhre Verkleiungselemente, vorzugsweise schwenkbar, angeordnet. Mittels dieser Verkleidungselemente erhält die Säule z.B. eine runde Form bzw. wird die Röhre dekoriert. Die Schwenkbarkeit der Verkleidungselemente ermöglicht einen leichten Zugang zu in der Säule angeordneten Funktionseinheiten, bspw. für Wartungs- oder Reparaturarbeiten, oder Fächern zum Einlegen und zum Entnehmen von Utensilien, wie Handtüchern oder dgl..

Die Brauchbarkeit des Funktionsträger wird dabei erfindungsgemäß dadurch verbessert, daß mehrere Verkleidungselemente unabhängig voneinander schwenkbar übereinander und/oder nebeneinander auf einer Höhe angeordnet sind.

Entsprechend der Verteilung der Verkleidungselemente sind bspw. Zwischenböden in der Säule angeordnet, so daß diese leicht in mehrere Fächer einteilbar ist. Selbstverständlich kann ein Verkleidungselement auch mehrere Fächer abdecken.

Eine einfache Verschwenkbarkeit der Verkleidungselemente wird erfindungsgemäß dadurch erreicht, daß die Verkleidungselemente über Befestigungselemente an dem Trägergerüst angebracht sind, welche an ihrer einen Seite ein scharnierartiges Element, um welches das Verkleidungselement schwenkbar ist, und auf ihrer gegenüberliegenden Seite einen Rastverschluß zur Aufnahme des entsprechenden Teils eines weiteren Verkleidungselements aufweisen. Das Verkleidungselement kann damit wie eine Tür geöffnet werden und rastet beim Verschließen ein, so daß es sich nicht versehentlich von selbst öffnet.

Bei einer bevorzugten Ausgestaltung der Erfindung sind die Befestigungselemente mit ihrer Innenseite auf das Trägergerüst aufgeklipst oder mit diesem verschraubt und weisen an ihrer Außenseite und/oder Innenseite Aufnahme- und Halteeinrichtungen auf, in welche Funktionseinheiten, bspw. Hänge- oder Ablageeinrichtungen, ggf. axial verschiebbar, einpreßbar sind.

In weiterer Ausgestaltung des Erfindungsgedankens ist am oberen und/oder am unteren Ende der Säule jeweils ein Spalt frei gelassen. Um die dadurch sichtbar werdenden Befestigungseinrichtungen zu verkleiden, sind an dem oberen und/oder dem unteren Ende der Säule Kappen angeordnet, die auch als Zierkappen ausgebildet sein können.

In Weiterbildung des Erfindungsgedankens ist in der Säule wenigstens ein Beleuchtungselement vorgesehen, dessen Licht vorzugsweise über einen Reflektor zum oberen und/oder unteren Ende der Säule gelenkt wird. Neben dem durch die am oberen und unteren Ende der Säule vorgesehenen Spalte austretenden Streulicht sorgt das Beleuchtungselement auch für eine Beleuchtung der Kappen.

Bei einer bevorzugten Ausführungsform der Erfindung ist in der Säule wenigstens eine Umlenkeinrichtung angeordnet, mittels welcher zumindest ein Teil des von dem Beleuchtungselement ausgesandten Lichts in eine festgelegte Richtung umlenkbar ist. Diese umgelenkten Anteile des emitierten Lichts können zur Beleuchtung eines Spiegels oder zur Akzentbeleuchtung bspw. einer Seifenschale, eines Ablegebretts oder eines Handtuchhalters genutzt werden.

Vorzugsweise ist die Umlenkeinrichtung aus transparentem Material, bspw. glasartigem Kunststoff (Polyacryl) oder Glasfaser ausgebildet. Ein derartiges Material weist einen hohen Lichtleitungskoeffizienten auf, so daß es möglich ist, ein Lichtbündel in jede gewünschte Richtung abzulenken. Die mittels einer solchen Umlenkeinrichtung erzielte Beleuchtung wird auch als "kaltes Licht" bezeichnet.

Bei einer weiteren bevorzugten Ausführungsform der Erfindung ist in der Säule ein Gebläse oder ein Ventilator angeordnet, welcher Luft vorzugsweise vom oberen Ende der Säule ansaugt und vorzugsweise zum unteren Ende der Säule hin bläst. Die Luft kann dabei durch den am oberen Ende der Säule vorgesehenen Spalt eintreten und durch den am unteren Ende vorgesehenen Spalt wieder aus der Säule austreten. Durch in der Säule vorgesehene Heizungs- oder Klimatisierungseinrichtungen kann der umgewälzte Luftstrom abgekühlt, aufgeheizt, gereinigt, getrocknet und/oder befeuchtet werden. Durch das Ausblasen der erwärmten Luft am unteren Ende der Säule wird der Fußbodenbereich erwärmt.

Um das Strömungsverhalten des geförderten Luftstroms zu verbessern sind die Kappen vorzugsweise als Luftleitelemente ausgebildet.

Gemäß einer zweckmäßigen Weiterbildung des Erfindungsgedankens wird mindestens ein Teil der geförderten Luft bspw. über einen, ggf. mit einem Steuerungsmechanismus versehenen, Verteiler abgezweigt und seitlich aus der Säule herausgeführt. Die abgezweigte und ggf. über Erwärmungselemente aufgewärmte Luft kann für einen Haartrockner, zur Trocknung und Erwärmung aufgehängter Handtücher und/oder zur Verhinderung der Auskondensation von Feuchtigkeit auf einem Spiegel oder Brillenhalter verwendet werden.

Erfindungsgemäß ist in der Säule ein Peltier-Element angeordnet, mit dessen kalter Seite ein wärmeleitender Körper, bspw. das Trägergerüst kühlbar ist, und mit dessen warmer Seite Zubehörteile, bspw. der Spiegel, erwärmbar sind. Wird warme, eine hohe Feuchtigkeit aufweisende Luft entlang eines derart gekühlten Körpers geführt, so kondensiert das Wasser aus der Luft auf dem Körper, bpsw. dem Trägergerüst aus und kann abgeführt werden. Durch diese Lufttrocknung wird die Nebelbildung in dem Sanitärraum vermindert. Zur Vergrößerung der Oberfläche können an dem Trägergerüst zusätzliche Rippen vorgesehen sein, die als Kühlkörper oder -rippen nutzbar sind. Selbstverständlich kann der kalten Seite des Peltier-Elements auch ein Kasten zugeordnet werden, der dann als Kühlbox fungiert. Die Erwärmung bspw. eines Spiegels kann dädurch erreicht werden, daß der warmen Seite des Peltier-Elements ein wärmeleitender Körper, bspw. ein Träger aus Aluminium, an dessen anderen Ende der Spiegel angebracht ist, zugeordnet ist. Die warme Seite des Peltier-Elements kann auch zur Luftheizung verwendet werden, indem dieser Seite des Peltier-Elements ein Körper zugeordnet wird, der zur Kühlung des Peltier-Elements diesem Wärme entzieht und diese an bspw. mittels eines Gebläses vorbeigeförderte Luft abgibt.

Bei einer bevorzugten Ausführungsform ist in oder an der Säule ein Infrarotdetektor vorgesehen, mittels dessen einzelne Funktionseinheiten schaltbar sind. Mittels dieses Infrarotdetektors kann die Gegenwart von Personen vor dem Funktionsträger ermittelt werden, woraufhin einzelne Funktionseinheiten, bspw. das Beleuchtungselement, das Gebläse, der Ventilator oder das Peltier-Element automatisch einschaltbar sind. Auf diese Weise wird ein externer Schalter gespart und die Funktionseinheiten werden rechtzeitig eingeschaltet, um eine optimale Funktion, bspw. zur Spiegelerwärmung, Luftheizung, Lufttrocknung usw., zu gewährleisten.

Erfindungsgemäß sind in dem Trägergerüst Hohlräume, bspw. als Kabelkanäle oder zur Durchführung warmer oder kalter Luft und/oder Flüssigkeit ausgebildet. Durch die Kabelkanäle werden die stromführenden Leitungen gemäß den Schutzbestimmungen für Sanitärräume verdeckt geführt und sind vor direktem Feuchtigkeitskontakt geschützt. Die Stromzufuhr in die Säule kann dabei zweckmäßigerweise über die meist nicht gekachelte und daher leichter zu bearbeitende Decke erfolgen. Auch können durch andere Hohlräume warme oder kalte Luft und/oder Flüssigkeit zur Heizung oder Kühlung geführt werden, ohne das zusätzliche Elemente, wie Schläuche, benötigt werden.

Vorzugsweise sind in der Säule Reinigungsfilter, durch welchen der durch das Gebläse geförderte Luftstrom hindurchtritt, und/oder ein Klimatisierungsgerät zum Trocknen oder Befeuchten der umgewälzten Luft vorgesehen. Damit werden möglichst gleichmäßige Bedingungen in dem Sanitärraum ermöglicht.

Weitere Ziele, Merkmale, Vorteile und Anwendungsmöglichkeiten der vorliegenden Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen oder deren Rückbeziehung.

Es zeigen:
- Fig. 1: eine schematische Darstellung einer ersten Ausführungsform eines erfindungsgemäßen Funktionsträgers,
- Fig. 2: eine schematische Darstellung einer zweiten Ausführungsform eines erfindungsgemäßen Funktionsträgers,
- Fig. 3: eine erste Ausführungsform eines Trägergerüstes,
- Fig. 4: eine zweite Ausführungsform eines Trägergerüstes,
- Fig. 5: eine dritte Ausführungsform eines Trägergerüstes,
- Fig. 6: eine vierte Ausführungsform eines Trägergerüstes,
- Fig. 7: ein Trägergerüst nach Fig. 5 mit einigen Verkleidungselementen,
- Fig. 8: ein Trägergerüst nach Fig. 4 mit einigen Verkleidungselementen,
- Fig. 9: eine teilweise aufgebrochene Darstellung einer Säule mit Befestigungseinrichtungen,
- Fig. 10: eine Ansicht einer Säule mit Funktionseinheiten zum Aufhängen und/oder Ablegen von Kleidungsstücken, Handtüchern und dgl.,

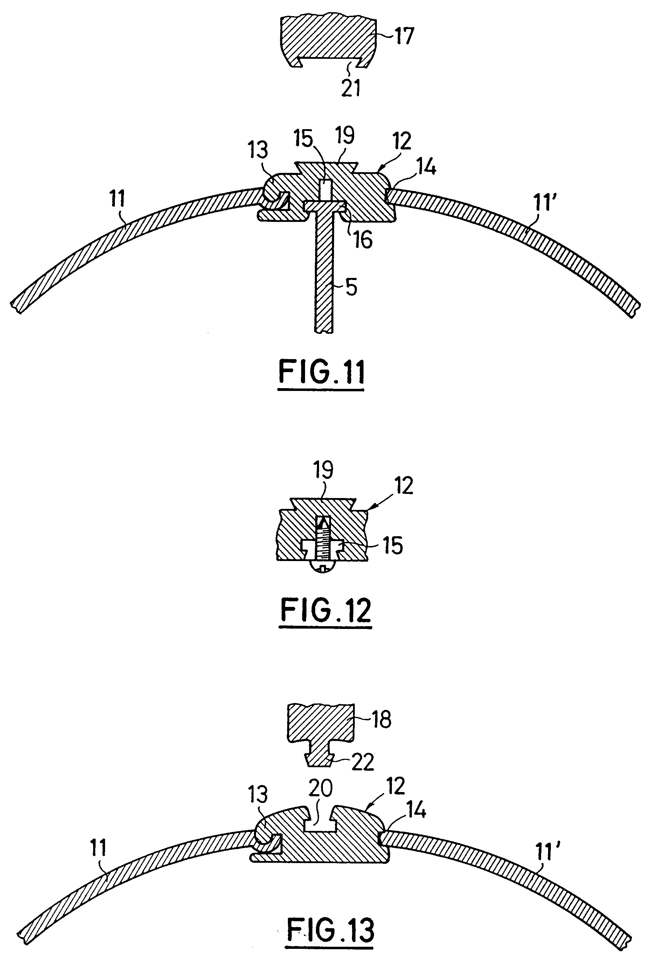

- Fig. 11: einen Teilschnitt durch eine Säule mit Darstellung eines Befestigungselementes,
- Fig. 12: einen Teilschnitt durch ein Befestigungselement mit angedeuteter Verschraubung, und
- Fig. 13: einen Teilschnitt durch eine Säule mit einem Befestigungselement anderer Ausgestaltung.

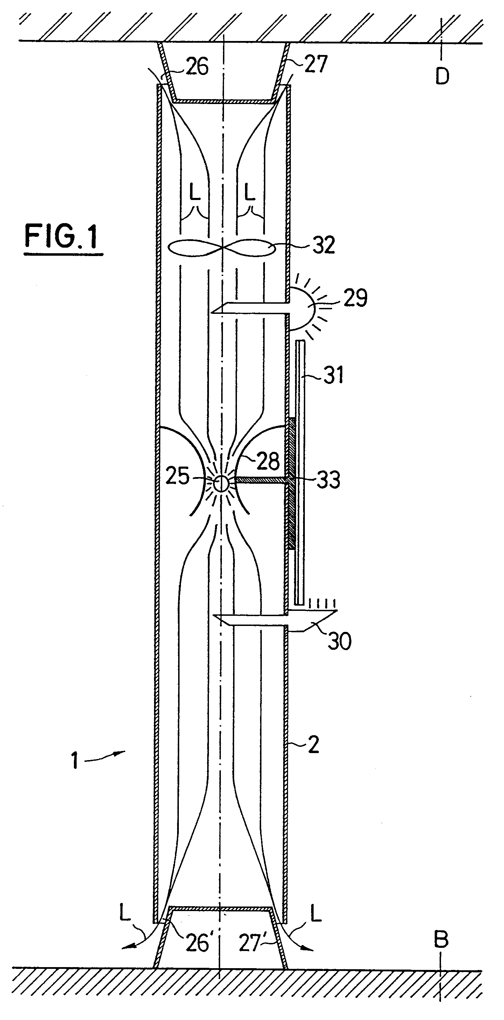

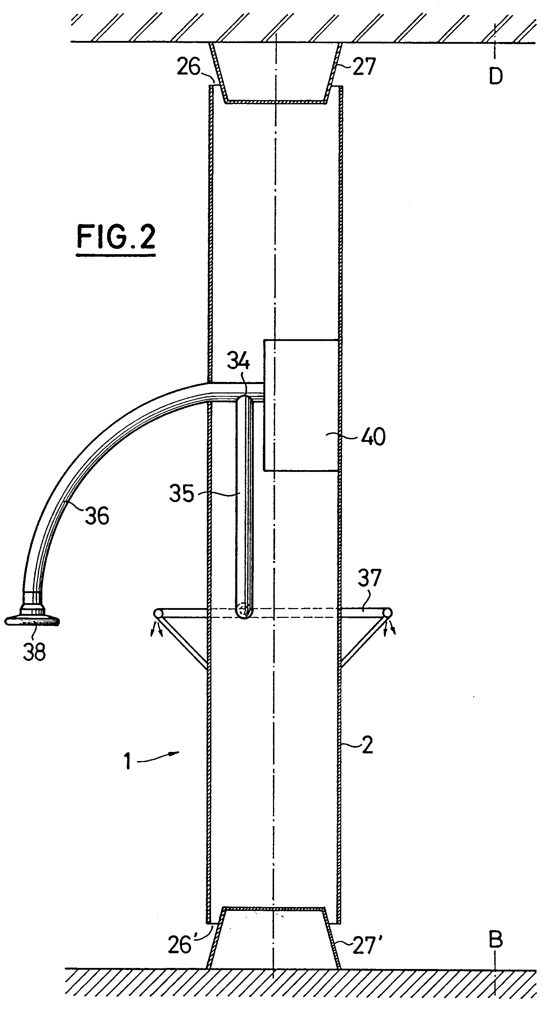

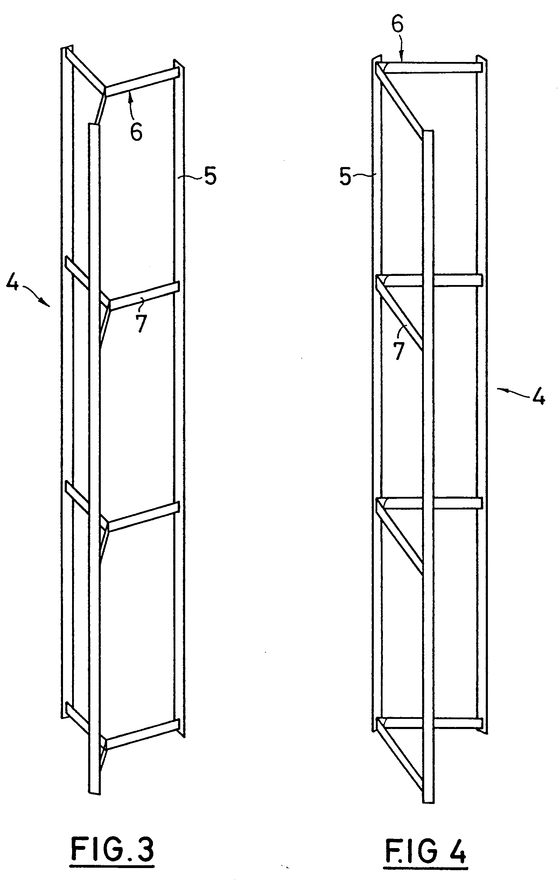

Ein in den Fig. 1 oder 2 dargestellter Funktionsträger bildet im wesentlichen eine schlanke, vertikale Säule 1, welche zwischen Raumdecke D und Raumboden B eingespannt ist, wie dies z.B. mittels Befestigungseinrichtungen 9 in Fig. 3, welche als verstellbare Buchsen 10 ausgebildet sind, veranschaulicht ist. Ebensogut kann jedoch die Säule 1 aber auch fest an der Raumdecke D und dem Raumboden B verankert, bspw. mittels einer Mutter und eines Bolzens verschraubt sein. Der Funktionsträger kann aber auch alleinstehend mit ensprechend ausgebildetem Fuß aufgestellt oder als Teil einer Sanitäreinrichtung, bspw. einer Duschkabine oder Badewanne, ausgeführt sein. Bei der Ausführung nach Fig. 1 besteht die Säule 1 im wesentlichen aus einer selbsttragenden Röhre 2.

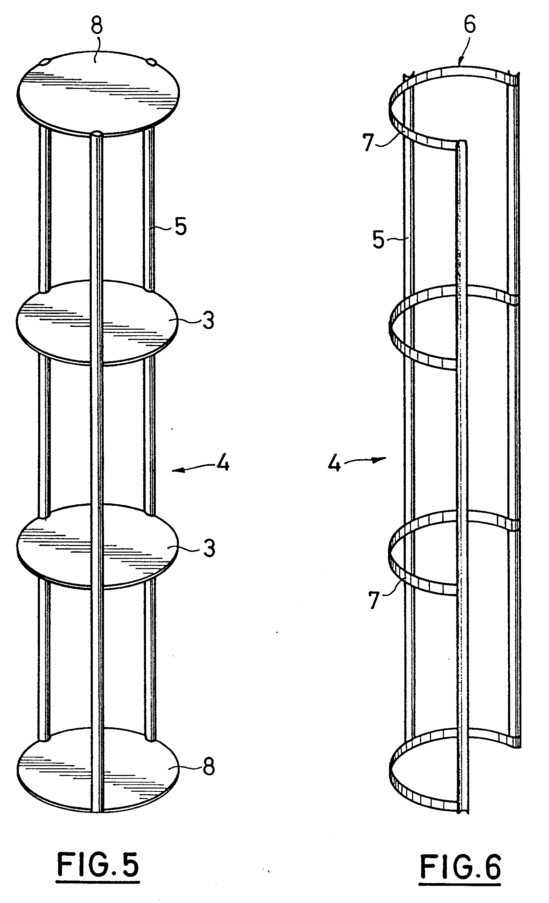

Die Säule 1 kann aber auch oder stattdessen im wesentlichen von einem Trägergerüst 4 aus Längsprofilen 5, bspw. stranggepreßten Aluminium-Profilen, gebildet sein, welche im wesentlichen vertikal angeordnet und über im wesentlichen horizontal angeordnete Verbindungselemente 6 miteinander verbunden sind. Wie in den Fig. 3 bis 6 dargestellt, können die Verbindungselemente 6 als Streben 7, Platten oder Scheiben 8 die Längsprofile 5 sternförmig (Fig. 3), dreieckförmig (Fig. 4), kreis- oder teilkreisförmig (Fig. 6) miteinander verbinden. Die Scheiben 8 können gleichzeitig als Zwischenböden 3 verwendet werden, wobei es selbstverständlich möglich ist, auch mehr und anders ausgebildete Zwischenböden vorzusehen.

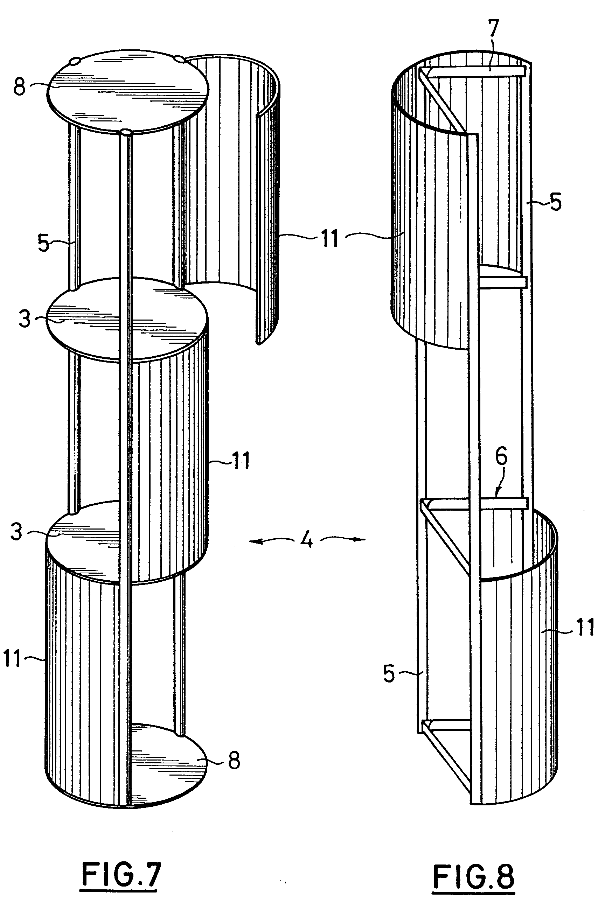

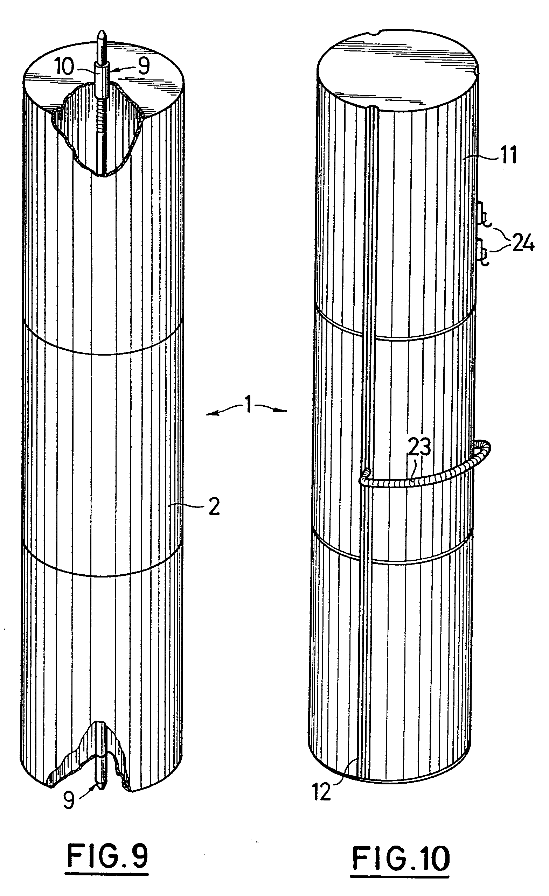

An dem Trägergerüst 4 können, wie in den Fig. 7 und 8 dargestellt, ein oder mehrere z.B. teilzylindrische Verkleidungselemente 11 übereinander und/oder nebeneinander auf gleicher Höhe schwenkbar angeordnet sein. Die Verkleidungselemente 11 sind dabei über Befestigungselemente 12 an den Längsprofilen 5 oder den Verbindungselementen 6 des Trägergerüsts 4 befestigt. An der einen Seite des Befestigungselements 12 ist dabei eine Art Scharnier 13 ausgebildet, um welches das Verkleidungselement 11 schwenkbar ist, auf der gegenüberliegenden Seite des Befestigungselements 12 eine Art Rastverschluß 14, in welchen das entsprechende Ende eines weiteren Verkleidungselements 11' einrastet, so daß das Verkleidungselement 11' sicher an dem Befestigungselement 12 gehalten ist und sich nicht ungewollt öffnet. Das Befestigungselement 12 dient dabei also gleichzeitig als Scharnier für ein Verkleidungselement 11 und als Verschluß für ein zweites, benachbartes Verkleidungselement 11'. Anstelle des Rastverschlusses 14 kann das Verkleidungselement 11' selbstverständlich auch durch einen Magnetverschluß oder andere Verschlußmaßnahmen, z.B. auch Sicherheitsschlössern gehalten werden. Das Befestigungselement 12 besteht vorzugsweise aus leicht elastischen oder biegsamen Material, bspw. Kunststoff, und weist auf seiner der Innenseite der Säule 1 zugekehrten Seite eine maulartige Ausnehmung 15 auf, so daß das Befestigungselement 12 leicht auf den entsprechend geformten Profilabschluß 16 der Längsprofile 5 oder der Verbindungselemente 6 aufklipsbar ist. Befestigungsabschnitte 17, 18 für Funktionseinheiten, Zubehörteile oder dgl. sind von außen und/oder innen an die Befestigungselemente 12 anklipsbar. Dazu sind an dem Befestigungselement 12, 12' bspw. schwalbenschwanzartige Vorsprünge 19 bzw. Ausnehmungen 15, 20 ausgebildet, welche mit entsprechenden Ausnehmungen 21 bzw. Vorsprüngen 22 an den Befestigungsabschnitten 17, 18 der Zubehörteile zusammenwirken. Die Vorsprünge 19 bzw. Ausnehmungen 15, 20 an den Befestigungselementen 12, 12' können auch als über zumindest eine Teillänge des Befestigungselements 12, 12' ausgebildete Führungen ausgestaltet sein, so daß die Funktionseinheiten, Zubehörteile oder dgl. axial entlang den Befestigungselementen 12, 12' verschiebbar sind. In Fig. 10 sind bspw. Handtuchhalter 23 und Kleiderhaken 24 dargestellt, welche an dem über die gesamte Länge der Säule 1 verlaufenden Befestigungselement 12 axial verschiebbar befestigt sind.

Die Röhre 2 der Säule 1 reicht nicht bis zu der Raumdecke D bzw. dem Raumboden B, so daß an der oberen bzw. der unteren Seite der Säule 1 jeweils ein Spalt 26, 26' für die Luftzirkulation frei bleibt. Die Röhre 2 ist über an der Raumdecke D und dem Raumboden B befestigte Kappen 27, 27' so gehalten, daß der Spalt 26, 26' nicht verschlossen ist.

Bei der in Fig. 1 dargestellten Ausführungsform ist in der Säule 1 ein Beleuchtungselement 25, bspw. ein Halogenstrahler vorgesehen. Das von dem Beleuchtungselement 25 emitierte Licht wird über einen Reflektor 28 vorzugsweise nach oben, aber auch z.T. zum unteren Ende der Säule hin abgelenkt, wo es als Streulicht, aber auch als Beleuchtung der Kappen 27, 27' durch den Spalt 26, 26' austritt. In der Säule 1 sind außerdem Umlenkeinrichtungen 29, 30 angeordnet, mittels welchen ein Teil des von dem Beleuchtungselement 25 ausgesandten Lichts umgelenkt und seitlich aus der Säule herausgeführt wird. Die Umlenkeinrichtungen 29, 30 bestehen aus transparentem Material, bspw. glasartigem Kunststoff (Polyacryl) oder Glasfaser, welches einen hohen Lichtleitungskoeffizienten aufweist. Dadurch ist es möglich ein Lichtbündel in jede gewünschte Richtung umzulenken. Dieses Phänomen wird auch als "kaltes Licht" bezeichnet. Das abgelenkte Licht kann zur Beleuchtung von Oberflächen, bspw. eines Spiegels 31, oder zur Akzentbeleuchtung einzelner Gegenstände, bspw. einer Seifenschale, eines Ablegebrettes oder dgl. verwendet werden.

In der Säule 1 ist auch ein Gebläse oder Ventilator 32 angeordnet, welcher Luft vom oberen Ende der Säule 1 ansaugt, die Luft durch die Säule 1 transportiert und zum unteren Ende der Säule 1 wieder herausbläst. Der Verlauf des Luftstroms L ist in Fig. 1 als Pfeil dargestellt. Um die Strömungseigenschaften der Säule 1 zu verbessern sind die Kappen 27, 27' als Luftleitelemente ausgebildet. Während der Luftstrom L die Säule 1 durchläuft kann er bspw. durch das Beleuchtungselement 25 oder andere Wärmequellen erwärmt werden, so daß die am unteren Ende der Säule 1 durch den Spalt 26' austretende Luft den Fußbereich des Sanitärraumes erwärmt. Außerdem kann der Luftstrom L in der Säule 1 durch Reinigungsfilter oder Klimatisierungsgeräte (nicht dargestellt) geführt werden, mittels derer der Luftstrom L gereinigt und/oder klimatisiert, insbesondere getrocknet werden kann, so daß luftfeuchtigkeitsbedingte Nebelbildung in dem Sanitärraum vermindert werden kann. Die Wärme des Beleuchtungselements 25 oder anderer Wärmequellen kann bspw. auch zur Erwärmung des Spiegels 31 verwendet werden, um das Auskondensieren von Feuchtigkeit auf der Glasoberfläche des Spiegels 31 zu verhindern. Dazu wird der Spiegel 31 über einen gut wärmeleitenden Träger 33 an der Säule 1 befestigt, welcher mit einer Wärmequelle in der Säule 1 in Verbindung steht. Neben oder anstelle des wärmeabgebenden Beleuchtungselements 25 kann in der Säule 1 auch ein Peltier-Element angeordnet sein, dessen warme Seite als Wärmequelle und dessen kalte Seite als Kältequelle für den Luftstrom L nutzbar ist.

Wie in Fig. 2 dargestellt, kann in der Säule 1 die aufgewärmte und durch ein Gebläse 40 geförderte Luft durch einen Verteiler 34 verschiedenen Anwendungen zugeführt werden. Von dem Verteiler 34, der ggf. mit einem Steuerungsmechanismus ausgestattet ist, gehen z.B. mehrere Leitungen 35, 36 ab, über welche die aufgewärmte Luft bspw. einem rund um die Säule 1 verlaufenden Handtuchhalter 37 oder einem Haartrockner 38 zugeführt werden kann. In dem Handtuchhalter 37 sind Öffnungen 39 ausgebildet, über welche die warme Luft austreten und auf dem Handtuchhalter 37 angeordnete Handtücher trocknen und/oder erwärmen kann.

Außer den beschriebenen Funktionseinheiten können an dem Funktionsträger selbstverständlich die verschiedensten weiteren Accessoires und/oder Zubehörteile angebracht oder anschließbar sein.

### Bezugszeichenliste

- 1: Säule
- 2: Röhre
- 3: Zwischenböden
- 4: Trägergerüst
- 5: Längsprofile
- 6: Verbindungselemente
- 7: Streben
- 8: Scheiben
- 9: Befestigungseinrichtungen
- 10: Buchse
- 11, 11': Verkleidungselemente
- 12, 12': Befestigungselemente
- 13: Scharnier
- 14: Rastverschluß
- 15: Ausnehmung
- 16: Profilabschluß
- 17: Befestigungsabschnitt
- 18: Befestigungsabschnitt
- 19: Vorsprung
- 20: Ausnehmung
- 21: Ausnehmung
- 22: Vorsprung
- 23: Handtuchhalter
- 24: Kleiderhaken
- 25: Beleuchtungselement
- 26, 26': Spalt
- 27, 27': Kappen
- 28: Reflektor
- 29: Umlenkeinrichtung
- 30: Umlenkeinrichtung
- 31: Spiegel
- 32: Ventilator
- 33: Träger
- 34: Verteiler
- 35: Leitung
- 36: Leitung
- 37: Handtuchhalter
- 38: Haartrockner
- 39: Öffnungen
- 40: Gebläse
- B: Raumboden
- D: Raumdecke
- L: Luftstrom

## Patentansprüche

1. Funktionsträger für Sanitärräume, wie Badezimmer, Duschräume oder dgl., dadurch gekennzeichnet, daß er als schlanke, vertikale Säule (1) ausgebildet ist, welche alleinstehend aufstellbar zwischen Raumdecke (D) und Raumboden (B) einspannbar oder als Teil einer Sanitäreinrichtung anordenbar ist und an bzw. in welcher ein oder mehrere Funktionseinheiten für die Beleuchtung, für die Erwärmung und/oder Abkühlung von Luft, für die Befeuchtung und/oder Trocknung von Luft, für die Reinigung von Luft, für die Erwärmung, Abkühlung und/oder Trocknung von Oberflächen und/oder Gegenständen, für die Körper- und/oder Haarpflege, für das Aufhängen und/oder die Ablage von Kleidungsstücken, Sanitärgeräten und/oder -zubehör, für die Aufnahme und/oder Führung von stromführenden Kabeln, für das Schalten elektrisch betriebener Einrichtungen, für die Aufnahme von Abfall und/oder Wäsche, für die Ton- und/oder Bildübermittlung, für die Anzeige von Informationsdaten und/oder für die Freizeitgestaltung und/oder für das Körpertraining vorgesehen sind.

2. Funktionsträger nach Anspruch 1, dadurch gekennzeichnet, daß die Säule (1) ein Trägergerüst (4) aus im wesentlichen vertikal angeordneten Längsprofilen (5) aufweist, welche über Verbindungselemente (6) miteinander verbunden sind.

3. Funktionsträger nach Anspruch 3, dadurch gekennzeichnet, daß die Verbindungselemente (6) im wesentlichen horizontal angeordnet und als gerade, abgewinkelte oder gekrümmte Streben (7), Platten, Scheiben (8) oder dgl. ausgebildet sind und die Längsprofile (5) in stern-, dreieck-, kreis- oder teilkreisförmiger Anordnung oder dgl. miteinander verbinden.

4. Funktionsträger nach einem der Ansprüche 1 bis 3, dadurch gekennzeichnet, daß die Säule (1) als selbsttragende Röhre (2) ausgebildet ist oder eine solche aufweist.

5. Funktionsträger nach einem der Ansprüche 1 bis 4, dadurch gekennzeichnet, daß an dem oberen und/oder dem unteren Ende der Säule (1) jeweils Befestigungseinrichtungen (9) angeordnet sind.

6. Funktionsträger nach Anspruch 5, dadurch gekennzeichnet, daß die Befestigungseinrichtungen (9) als verstellbare Buchse (10) ausgebildet sind, mittels welcher die Säule (1) zwischen Raumdecke (D) und Raumboden (B) verspannbar ist.

7. Funktionsträger nach Anspruch 5, dadurch gekennzeichnet, daß die Säule (1) fest mit der Raumdecke (D) und/oder dem Raumboden (B) verankerbar, bspw. verschraubbar ist.

8. Funktionsträger nach einem der Ansprüche 1 bis 7, dadurch gekennzeichnet, daß an dem Trägergerüst (4) und/oder der Röhre (2) Verkleidungselemente (11), vorzugsweise schwenkbar, angeordnet sind.

9. Funktionsträger nach Anspruch 8, dadurch gekennzeichnet, daß mehrere Verkleidungselemente (11) unabhängig voneinander schwenkbar übereinander und/oder nebeneinander auf einer Höhe angeordnet sind.

10. Funktionsträger nach einem der Ansprüche 1 bis 9, dadurch gekennzeichnet, daß in der Säule (1) Zwischenböden (3) angeordnet sind.

11. Funktionsträger nach Anspruch 8 oder 9, dadurch gekennzeichnet, daß die Verkleidungselemente (11) über Befestigungselemente (12, 12') an dem Trägergerüst (4) angebracht sind, welche an ihrer einen Seite ein scharnierartiges Element (13), um welches das Verkleidungselement (11) schwenkbar ist, und auf ihrer gegenüberliegenden Seite eine Rastverschluß (14) zur Aufnahme des entsprechenden Teils eines weiteren Verkleidungselements (11') aufweisen.

12. Funktionsträger nach Anspruch 11, dadurch gekennzeichnet, daß die Befestigungselemente (12, 12') mit ihrer Innenseite auf das Trägergerüst (4) aufgeklipst oder mit diesem verschraubt sind und an ihrer Außenseite und/oder Innenseite Aufnahme- und Halteeinrichtungen (15, 19, 20) aufweisen, in welche Funktionseinheiten, bspw. Hänge- oder Ablageeinrichtungen, ggf. axial verschiebbar, einpreßbar sind.

13. Funktionsträger nach einem der Ansprüche 1 bis 12, dadurch gekennzeichnet, daß am oberen Ende der Säule (1) und/oder dem unteren Ende der Säule (1) jeweils ein Spalt (26, 26') freigelassen ist.

14. Funktionsträger nach einem der Ansprüche 1 bis 13, dadurch gekennzeichnet, daß an dem oberen und/oder dem unteren Ende der Säule (1) Kappen (27, 27') angeordnet sind.

15. Funktionsträger nach einem der Ansprüche 1 bis 14, dadurch gekennzeichnet, daß in der Säule (1) wenigstens ein Beleuchtungselement (25) vorgesehen ist, dessen Licht, vorzugsweise über einem Reflektor (28), zum oberen und/oder unteren Ende der Säule (1) gelenkt wird.

16. Funktionsträger nach einem der Ansprüche 1 bis 15, dadurch gekennzeichnet, daß in der Säule (1) wenigstens eine Umlenkeinrichtung (29, 30) angeordnet ist, mittels welcher zumindest ein Teil des von dem Beleuchtungselement (25) ausgesandten Lichts in eine festgelegte Richtung umlenkbar ist.

17. Funktionsträger nach Anspruch 16, dadurch gekennzeichnet, daß die Umlenkeinrichtung (29, 30) aus transparentem Material, bspw. glasartigen Kunststoff (Polyacryl) oder Glasfaser, ausgebildet ist.

18. Funktionsträger nach einem der Ansprüche 1 bis 17, dadurch gekennzeichnet, daß in der Säule (1) ein Gebläse oder Ventilator (32) angeordnet ist, welcher Luft, vom einen, vorzugsweise oberen Ende der Säule (1) , ansaugt und zum anderen, vorzugsweise unteren Ende der Säule (1) hin bläst.

19. Funktionsträger nach einem der Ansprüche 14 bis 18, dadurch gekennzeichnet, daß die Kappen (27, 27') als Luftleitelemente ausgebildet sind.

20. Funktionsträger nach einem der Ansprüche 18 oder 19, dadurch gekennzeichnet, daß mindestens ein Teil der geförderten Luft, bspw. über einen, ggf. mit einem Steuerungsmechanismus versehenen, Verteiler (34) abzweigbar und seitlich aus der Säule (1) herausführbar ist.

21. Funktionsträger nach einem der Ansprüche 1 bis 20, dadurch gekennzeichnet, daß in der Säule (1) ein Peltier-Element angeordnet ist, mit dessen kalter Seite ein wärmeleitender Körper, bspw. das Trägergerüst (4), kühlbar ist, und mit dessen warmer Seite Zubehörteile, bspw. ein Spiegel (31), erwärmbar ist.

22. Funktionsträger nach einem der Ansprüche 1 bis 21, dadurch gekennzeichnet, daß in oder an der Säule (1) ein Infrarotdetektor vorgesehen ist, mittels dessen einzelne Funktionseinheiten schaltbar sind.

23. Funktionsträger nach einem der Ansprüche 1 bis 22, dadurch gekennzeichnet, daß in dem Trägergerüst (4) Hohlräume, bspw. als Kabelkanäle oder zur Durchfuhr warmer oder kalter Luft und/oder Flüssigkeit, ausgebildet sind.

24. Funktionsträger nach einem der Ansprüche 1 bis 23, dadurch gekennzeichnet, daß in der Säule (1) Reinigungsfilter, durch welchen der durch das Gebläse (40) oder den Ventilator (32) geförderte Luftstrom hindurchtritt, und/oder Klimatisierungsgeräte zum Trocknen oder Befeuchten der umgewälzten Luft vorgesehen sind.
